# EUROPEAN PATENT SPECIFICATION

(11) **EP 3 730 359 B1**
(45) Date of publication and mention of the grant of the patent: **07.05.2025**
(21) Application number: 18888940.6
(22) Date of filing: 05.02.2018
(51) Int. Cl.: B60S 5/06, B60L 53/80

(54) **BATTERY SWAPPING ACTUATING MECHANISM**
BETÄTIGUNGSMECHANISMUS FÜR BATTERIEWECHSEL
MÉCANISME D'ACTIONNEMENT DE CHANGEMENT DE BATTERIE

(30) Priority: 13.12.2017 CN 201711329562
(43) Date of publication of application: 28.10.2020
(73) Proprietor: NIO (Anhui) Holding Co., Ltd., Hefei City, Anhui Province (CN)
(72) Inventor: LI, Nan, Shanghai (CN); DING, Xikun, Shanghai (CN); MA, Yongyue, Shanghai (CN); TIAN, Xiaotao, Shanghai (CN)
(74) Representative: Vossius & Partner Patentanwälte Rechtsanwälte mbB
(86) International application number: PCT/CN2018/075241
(87) International publication number: WO 2019/114126

(56) References cited:
- WO-A1-2013/144953
- CN-A- 101 976 731
- CN-A- 102 267 437
- CN-A- 105 000 001
- CN-A- 106 347 323
- CN-A- 107 097 762
- CN-U- 206 231 369
- US-A1- 2003 209 375
- US-A1- 2016 107 619

## Description

### Technical Field

The application relates to the field of battery swap services, and specifically to a battery swapping executing mechanism.

### Background Art

A battery swapping executing mechanism for battery swapping for an electric vehicle is a guide rail-type automated battery swap trolley. Generally, an electric vehicle which requires a battery swap is lifted to a certain height above the ground, and the trolley moves along a track rail to an area below the vehicle. Firstly, the trolley is lifted to approach a battery, and the relative position of the trolley with respect to the battery is fixed; then the trolley removes the battery from the vehicle, descends with the battery, moves away from the vehicle along the track rail, and moves to a battery storage station to swap the battery for a fresh battery; and finally, the trolley moves to an area below the lifted vehicle again, repeats the foregoing actions, and installs the fresh battery onto the vehicle.

Currently, there are multiple types of automated battery swap systems in which the structures and principles of battery swap trolleys are significantly different, and battery swap processes are also different. CN 107 097 762 A discloses a rail-guiding battery replacing robot comprising a body, a battery transporting part and a battery assembling-disassembling part. In the assembled state, the battery assembling-disassembling part is arranged in a mode such that the battery transporting part is not disturbed to increase the control space of the battery replacing robot. CN 206 231 369 U discloses an alignment device and a positioning mechanism for swapping an electric installation, such as in a battery swapping station. CN 106 347 323 A discloses a lifting carrying device comprising a walking mechanism, a lifting mechanism, a floating mechanism and an unlocking mechanism. The floating mechanism comprises a base and a positioning part, the base being fixedly connected to a lifting platform. Through the walking mechanism, the lifting carrying device is controlled to walk to a preset position, the lifting mechanism lifts carried equipment such as batteries of electric automobiles to a preset height, and the floating mechanism is generally used for bearing the carried equipment. US 2016/107619 A1 discloses a battery pack lift system which includes a frame having nutrunners mounted thereon according to a battery pack fastener pattern for a vehicle, a lift configured to raise and lower the frame with regard to the vehicle, a first air bearing positioned between the frame and the lift, the first air bearing configured to allow relative movement between the frame and the lift, and a second air bearing positioned on the frame, the second air bearing configured to allow relative movement between a battery pack and the frame.

### Summary of the Invention

One aspect of the application is to provide a battery swapping executing mechanism according to claim 1.

Optionally, in the battery swapping executing mechanism, the lifting/lowering portion is provided with guide portions, the driving mechanism is provided with movable portions, the movable portions move in a second direction, the second direction is substantially perpendicular to the first direction, and one of the guide portion and the movable portion comprises a wedged surface, and the other of the two is mated with the wedged surface.

Optionally, in the battery swapping executing mechanism, the movable portion has a roller assembly, the guide portion has a wedged surface, and the roller assembly is mated with the wedged surface.

Optionally, in the battery swapping executing mechanism, the movable portion comprises a first roller and a second roller which are disposed coaxially, one of the first roller and the second roller is in contact with the base, and the other is in contact with the wedged surface.

Optionally, in the battery swapping executing mechanism, the lifting unit further comprises guide columns in the first direction, one end of each of the guide columns is arranged on the base, a lifting/lowering component of the lifting/lowering portion is provided with a through hole for the guide column to pass through, and the guide column is used for limiting a lifting/lowering trajectory, in the first direction, of the lifting/lowering component.

Optionally, in the battery swapping executing mechanism, a plurality of groups of guide portions and movable portions which are mated with each other are provided, the driving mechanism further comprises a first frame and a driving member, all the movable portions are disposed on the first frame, and motion output from the driving member drives one or more of the movable portions to move in the second direction, so as to drive the first frame to bring other movable portions into movement on the base in the second direction.

Optionally, in the battery swapping executing mechanism, the locking/unlocking unit has an opening for exposing the conveying unit, and when the locking/unlocking unit and the conveying unit are raised or lowered relative to each other, the top of the conveying unit is able to ascend from the opening to a level higher than the locking/unlocking unit or descend to a level lower than the locking/unlocking unit.

Optionally, in the battery swapping executing mechanism, the locking/unlocking unit comprises torque guns for locking and unlocking a battery, and battery pins and vehicle body pins which assist in battery locking and unlocking, wherein the battery pins are used for alignment with the battery before unlocking a battery, and the vehicle body pins are used for alignment with a vehicle body before locking a battery.

Optionally, in the battery swapping executing mechanism, the locking/unlocking unit further comprises a support block for lifting a battery.

Optionally, the battery swapping executing mechanism further comprises track rails arranged in the second direction, wherein docking and guiding units are disposed at one end of the track rails to guide a battery being exchanged; and the docking and guiding units are disposed at two sides, in a third direction, of the base, the third direction being substantially perpendicular to the second direction.

In the battery swapping executing mechanism according to the application, the height of the conveying unit for battery exchange is constant, and the lifting unit ascends or descends relative to the conveying unit such that the height of the locking/unlocking unit for locking or unlocking a battery can be higher or lower than the conveying unit, such that the switching between positions of the locking/unlocking unit and the conveying unit is achieved. The locking/unlocking unit is further provided with a space which is raised or lowered relative to the conveying unit. Because the conveying unit does not ascend or descend during the lifting/lowering, the battery swapping executing mechanism does not need to be lifted as a whole, such that the overall lifting height of the battery swapping executing mechanism is reduced. In addition, auxiliary positioning is carried out by raising or lowering the vehicle, such that the overall height of the battery swap station can also be reduced, and therefore the battery swapping executing mechanism in the application can be used in an underground parking garage.

As to a transmission unit, the solution of combining powered rollers and unpowered rollers is adopted, thereby omitting an additional electric motor for the conveying unit, and reducing the lifting weight and the costs.

The locking/unlocking unit is provided with the battery pins for alignment with the battery during battery detachment and the vehicle body pins for alignment with the vehicle body during battery installation. A separate electric pin can be used, which allows a small occupied space, a short pin stroke, and a high compatibility. The two types of pins are used for different battery swap steps, and the position of the locking/unlocking unit does not need to be memorized when the pins are aligned for the first time, thus simplifying the process and improving the positioning precision.

The docking and guiding units for guiding a battery to be exchanged are also mounted on the base of the battery swapping executing mechanism.

Other aspects and features of the application will become apparent from the following detailed description with reference to accompanying drawings. However, it should be understood that the accompanying drawings are designed for the purpose of explanation only and are not intended to limit the scope of the application, as they should refer to the appended claims. It should also be understood that the accompanying drawings are only intended to conceptually illustrate the structures and processes described herein and are not necessarily drawn to scale unless otherwise indicated.

### Brief Description of the Drawings

The application will be more fully understood by referring to the following detailed description of specific embodiments in conjunction with the accompanying drawings, in which like reference numerals refer to like elements throughout the figures. In the figures:
Figs. 1 and 2 are exposed schematic structural views of a battery swapping executing mechanism according to the application, wherein Fig. 1 includes a battery, and Fig. 2 does not include a battery;
Fig. 3 is an exposed schematic structural view of another embodiment of a battery swapping executing mechanism according to the application;
Figs. 4 and 5 are assembled schematic views of a battery swapping executing mechanism according to the application, with the battery swapping executing mechanism being in an initial state (i.e., the battery is carried on a conveying unit), wherein Fig. 4 includes a battery, and Fig. 5 does not include a battery; and
Fig. 6 is a schematic view of a battery swapping executing mechanism in a working state according to the application.

### Detailed Description of Embodiments

In order to help those skilled in the art to accurately understand the claimed subject matter of the application, the specific embodiments of the application will be described in detail below with reference to the accompanying drawings.

A battery swapping executing mechanism according to the application may be used as an automated battery swap rail trolley, also referred to as a rolling guide vehicle (RGV) and briefly referred to as a battery swap trolley below, and is used for battery swapping for an electric vehicle. The battery swap trolley is a rail vehicle, which moves back and forth between a battery compartment and a battery swap station along track rails, wherein an electric vehicle with a battery pack to be swapped enters the battery swap station. Herein, the battery can also be referred to as a battery pack, a battery module, etc., and is an integrated device for providing driving power to the electric vehicle. The battery swap trolley in a no-load state is moved to an area below a vehicle in the battery swap station, detaches a used battery pack from the vehicle, and transfers the used battery from the battery swap station to the battery compartment. The used battery is replaced with a fresh battery at the battery compartment. The battery swap trolley carrying the fresh battery is moved to the battery swap station again, and installs the fresh battery onto the vehicle. The above work flow is automated, is applicable to small battery swap places having a small height in space and can provide a modularly extended battery swap service.

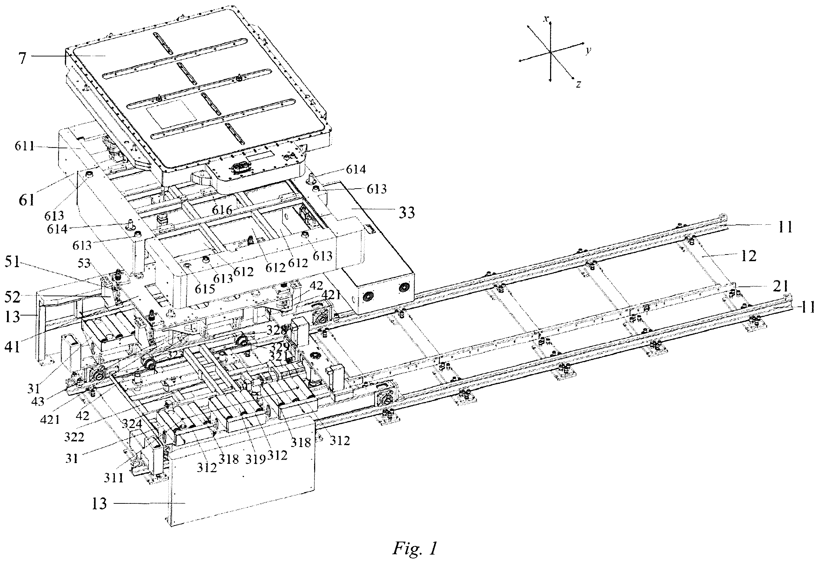

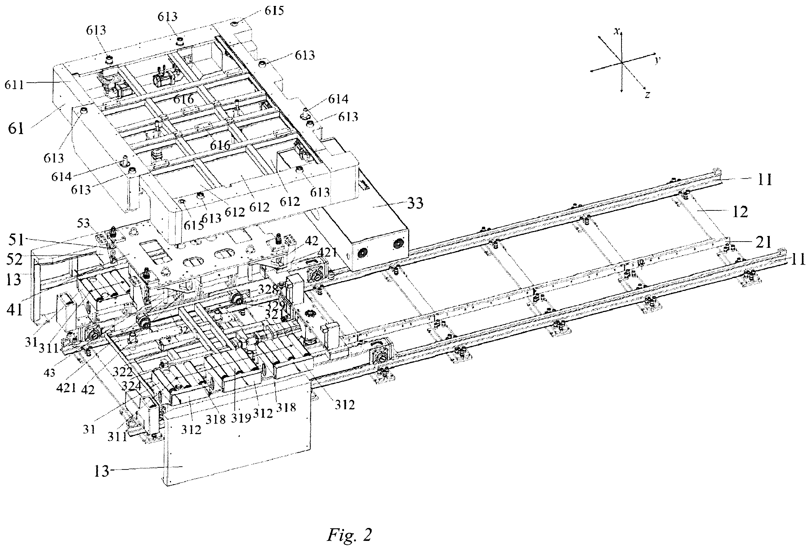

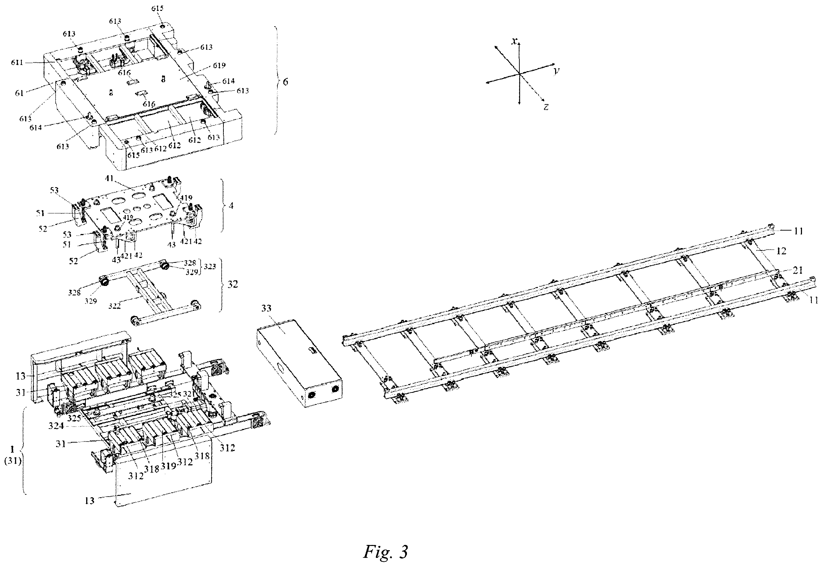

Figs. 1 to 3 show schematic views of a structure of a battery swap trolley according to the application, and are exploded views. The exploded view in Fig. 1 includes a battery 7, and the exploded views in Figs. 2 and 3 do not include a battery. As shown in Fig. 3, the battery swap trolley comprises a base 1, a locking/unlocking unit 6, a conveying unit 31 and a lifting unit 4, 32. The lifting unit 4, 32 comprises a driving mechanism 32 and a lifting/lowering portion 4 driven by the driving mechanism to ascend or descend. The conveying unit 31 is fixed on the base 1, and the driving mechanism 32 is movable relative to the base 1. The lifting/lowering portion 4 is located above the base 1 and is driven by the driving mechanism 32 to perform lifting/lowering motion. The lifting/lowering motion includes movement in a first direction x. The first direction x is a height direction.

Referring to Figs. 1 and 2, the driving mechanism 32 is arranged on the base 1 and is movable in a second direction y relative to the base 1. The second direction y is in a horizontal plane, and therefore is substantially perpendicular to the first direction x. The driving mechanism 32 comprises a driving member 321, a first frame 322 and movable portions 323. The driving member 321 is an electric motor having an output shaft connected to a lead screw 324. The first frame 322 is an I-shaped frame, and nuts (not shown) matching the lead screw are integrated in the first frame 322. The movable portions 323 are disposed on two end plates of the I-shaped frame. When the electric motor operates, rotary motion output by the electric motor is converted into movement of the first frame 322 in the second direction y by means of a lead screw-nut fit, such that the movable portions 323 are driven to move in the second direction y.

The movable portions 323 comprise four roller assemblies arranged on the first frame 322 respectively. Each roller assembly is formed by a first roller 328 and a second roller 329 which are coaxial. The first roller 328 has a larger roller diameter and is in contact with the base 1, and the second roller 329 has a smaller roller diameter and is in contact with the lifting/lowering portion 4.

The lifting/lowering portion is provided with guide portions 42. There are four guide portions 42 corresponding to the movable portions 323. Each guide portion 42 has a wedged surface 421. Four wedged surfaces 421 are respectively arranged, in the form of wedged blocks, at two sides of a lifting plate 41 which functions as a lifting/lowering component. Each wedged surface 421 cooperates with the second roller 329 of each movable portion 323 such that, when the movable portion 323 moves, the guide portion 42 moves accordingly with the movable portion 323. Definitely, the positions of the movable portion and the guide portion can be interchanged. Alternatively, it is also possible to provide a wedged surface on the movable portion such that the movable portion is mated with the guide portion with a wedge fit.

The lifting/lowering portion further comprises guide columns 43. There are four guide columns 43, with one end being inserted into a socket 325 on the base and the other end passing through a through hole 419 of the lifting plate 41. The lifting plate 41 may ascend and descend in the first direction x relative to the guide columns 43.

When the electric motor drives the first frame 322 to move, one or more movable portions are driven and actuate other movable portions to move. The first rollers 328 on the movable portions 323 move relative to the base 1, and the wedged surfaces 421 move relative to the second rollers 329. Because of the wedge effect of the wedged surfaces 421 and the movement of the lifting plate 41 relative to the guide columns 43, the lifting plate 41 can be lifted or lowered. In some other implementations, the positions of the guide column and the socket can also be interchanged.

The locking/unlocking unit 6 is used for locking and unlocking a battery and is driven by the lifting/lowering portion 4 of the lifting unit to ascend or descend. The locking/unlocking unit 6 is connected to the lifting/lowering portion 4 by means of a floating mechanism which will be described below. Under the effect of the floating mechanism, the locking/unlocking unit 6 floats at least in a horizontal plane (perpendicular to the direction X). The locking/unlocking unit 6 may also ascend and descend in the first direction x along with the lifting/lowering portion 4.

The conveying unit 31 is used for battery exchange and has a first support surface 311 for contact with the battery (denoted by arrows in Figs. 1 and 2). The locking/unlocking unit 6 has a second support surface 611 for carrying the battery, and the conveying unit 31 and the locking/unlocking unit 6 can be raised or lowered relative to each other, to change a relative height position of the first support surface 311 and the second support surface 611. As an example, the conveying unit 31 can be fixed to the base at a constant height, and the locking/unlocking unit can move up and down to change its height. The driving mechanism 32 drives the lifting/lowering portion 4 to ascend, and thus drives the locking/unlocking unit 6 to ascend, such that the second support surface 611 is higher than the first support surface 311. The driving mechanism 32 drives the lifting/lowering portion 4 to descend, and thus drives the locking/unlocking unit 6 to descend, such that the second support surface 611 is lower than the first support surface 311.

The conveying unit 31 comprises a roller transmission device. A roller surface of the roller transmission device forms the first support surface 311. The roller transmission device is configured to convey a battery in the second direction y. The roller transmission device is formed by a plurality of roller carriers 312 arranged in the second direction y. As shown, a total of three roller carriers 312 are arranged in the second direction y to form one roller transmission device. The roller carriers 312, at head and tail ends, of the three roller carriers 312 are provided with third powered rollers 318; and the middle roller carrier is provided with fourth unpowered rollers 319, i.e., driven rollers. In this way, the roller carriers 312 can be driven automatically, without the need of additionally disposing an electric motor and a transmission member for the roller transmission device.

There may be a plurality of roller transmission devices. In the embodiments shown, there are two roller transmission devices, which are respectively arranged at two sides, in a third direction z, of the base 1. The third direction z is in a plane substantially perpendicular to the first direction x, and is substantially perpendicular to the second direction y. As a compact design, the two roller transmission devices can be spaced apart in the third direction z by the driving mechanism 32. That is to say, the driving mechanism 32 and the lifting/lowering portion 4 are arranged in the middle of the base 1, and the conveying unit is arranged at either side of the base 1.

The lifting plate 41 is connected to the locking/unlocking unit 6 via the floating mechanism. The locking/unlocking unit 6 can float at least in a plane direction. The floating mechanism 32 facilitates the floating of the locking/unlocking unit 6 by utilizing chains. Four chains 51 and four columns 52 are respectively arranged at four corners of the lifting plate 41 (the number of the chains and the columns may be adjusted according to the actual layout). A first end (which is an upper end as shown) of the chain 51 is connected to the lifting plate 41, and a second end (a lower end) is connected to the column 52. The column 52 is L-shaped as shown, a first end (a lower end) of the column is connected to the chain 51 as described above, and a second end (an upper end) thereof is connected to the bottom of the locking/unlocking unit 6 by means of a flange 53. When the lifting plate 41 ascends or descends, the lifting plate 41 drives the chains 51 and the columns 52 as well as the locking/unlocking unit 6 to move together in a same direction. When the locking/unlocking unit 6 needs to be aligned with a battery or a vehicle body, because of the chain 51, the locking/unlocking unit 6 can float at least in the plane direction relative to the lifting plate 41 for adjusting the relative position.

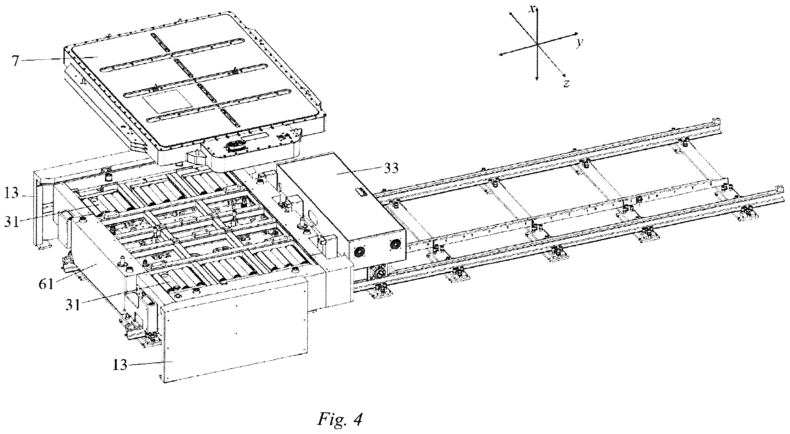

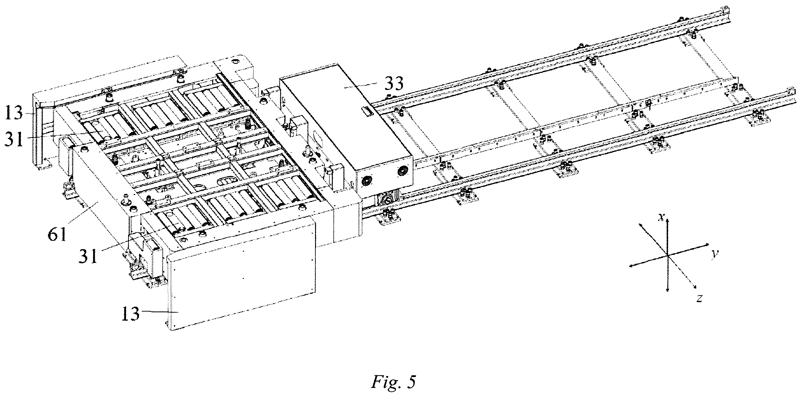

The locking/unlocking unit 6 is used for installing a battery onto or detaching a battery from the vehicle. A main body structure of the locking/unlocking unit is a second frame 61. The second frame 61 is provided with a space therein to accommodate the roller transmission device. As shown, the second frame 61 is divided into a plurality of smaller spaces 612, and the area of a single small space 612 is substantially corresponding to the area of a single roller carrier 312 so as to expose the corresponding roller carrier 312. Therefore, when the locking/unlocking unit ascends and descends relative to the roller transmission device, the roller carrier 312 can extend out of or retract back into the space 612, such that one of the surfaces, i.e., the first support surface 311 and the second support surface 611, of the two for contact with the battery can be higher or lower than the other one. Other areas where the roller carriers 2 do not need to be exposed can be covered with a cover plate 619 to provide a dustproof and aesthetic function, as shown in Fig. 3. Figs. 4 and 5 are structural views of a battery swap trolley according to the application, and in this case, the battery swap trolley is in an initial state or has been lowered to return to the initial state. Fig. 4 is a schematic view including a battery 7, and Fig. 5 does not include a battery. As shown, in this state, the roller transmission devices are in the spaces 612 of the locking/unlocking unit, and in the initial state, the conveying unit 31 carries the battery. Therefore, the first support surface of the conveying unit 31 is higher than the second support surface.

The locking/unlocking unit further comprises torque guns 613 for locking and unlocking the battery, vehicle body pins 615 for alignment with the vehicle body, battery pins 614 for alignment with the battery, and support blocks 616, all these components being arranged at the top of the second frame 61. The torque gun 613 has a relatively small size, and therefore a plurality of torque guns 613 can be arranged on the second frame 61. A servo driving unit 33 for the torque guns is arranged on the base, and does not ascend or descend along with the lifting/lowering portion 4. There are two types of pins on the second frame 61, including the battery pins 614 and the vehicle body pins 615, which are used for different scenarios. While the battery is detached from the vehicle, the battery pins 614 are aligned with the battery. The vehicle body pins 615 are arranged at top corners of the second frame 61, and while a battery is installed onto the vehicle, the vehicle body pins 615 are aligned with the vehicle body. The battery pins 614 and/or the vehicle body pins 615 may be separate electric pins, allows a small occupied space, a short stroke, and a high compatibility. When the locking/unlocking unit carries the battery detached from the vehicle, the support blocks 616 function to carry the battery.

The battery swap trolley further comprises track rails 11 extending in the second direction y and a walking mechanism which drives the base 1 to walk along the track rail 11. Referring to Figs. 1 to 3, the walking mechanism comprises an electric motor (not shown), a gear (not shown), a rack 21 and a bearing. The rack 21 substantially parallel to the track rails 11, i.e., extending in the second direction y, is arranged between the two track rails 11. The track rails 11 are connected by guide rail supports 12. The electric motor is a driving servo electric motor of the battery swap trolley, and is connected to the gear which is meshed with the rack 21. The electric motor is started to drive the gear, and by means of a gear-rack transmission, wheels of the battery swap trolley moves, in the form of a bearing, in the track rails 11. The bearing is mounted below the base, and the base movably walks on the track rails 11 by means of the bearing and moves between a battery compartment and a battery swap station in the second direction y along the track rails 11.

Docking and guiding units 13 are disposed at one end of the track rail 11 to guide a battery being exchanged. The docking and guiding units 13 are disposed at two sides, in the third direction z, of the base 1. Therefore, when the base 1 moves to this end along the track rails 11, the roller transmission devices are located between the docking and guiding units 13, and accordingly, the carried battery is also located between the docking and guiding units 13. As shown, the docking and guiding units 13 are a pair of guide doors, with its height in the first direction x being greater than that of the roller carriers 312, so as to limit the position of the battery in the third direction z. A clearance distance between the docking and guiding units 13 depends on a battery size. When the battery is conveyed from the battery swap trolley to the battery compartment or from the battery compartment to the battery swap trolley, the docking and guiding units 13 can limit the battery to being conveyed in the second direction y along an expected trajectory.

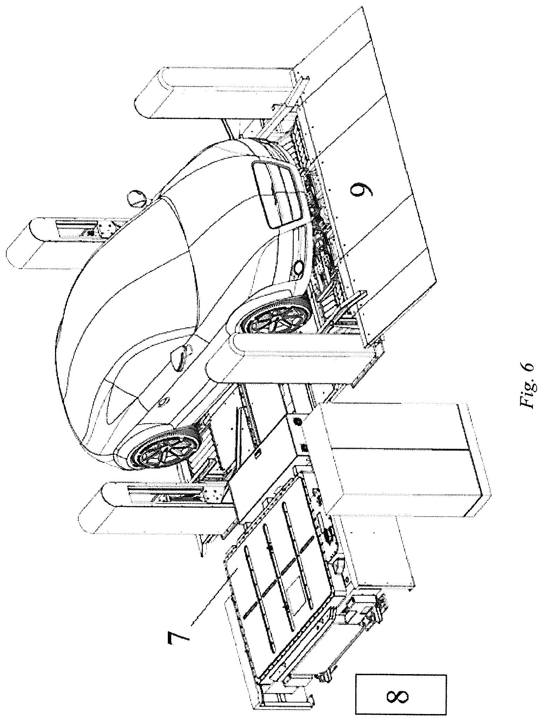

Referring to Fig. 6, an exemplary operation manner of the battery swap process of the battery swap trolley is described below.
1) Outside a battery swap station 9, the lifting/lowering portion is first raised such that the second support surface 611 of the locking/unlocking unit is higher than the first support surface 311 of the conveying unit. Meanwhile, the battery swap trolley enters the battery swap station 9 along the track rails 11, and when the battery swap trolley reaches the battery swap station 9, the second support surface 611 has already become higher than the first support surface 311. The raising action of the lifting/lowering portion may also be performed in the battery swap station.
2) At this point, a vehicle with a battery to be swapped has been inside the battery swap station 9, the vehicle is controlled to descend, the battery pins 614 on the locking/unlocking unit are aligned with the battery, and the torque guns 613 work and detach the battery.
3) The detached battery is carried by the second support surface 611, and the trolley conveys the battery 7 out of the battery swap station. The vehicle is raised. When the trolley reaches the battery compartment 8 shown by a block, the lifting/lowering portion drives the locking/unlocking unit to descend such that the second support surface 611 is lower than the first support surface 311, and the conveying unit 31 carries the battery 7. The descending action of the lifting/lowering portion may also be performed during transportation after the battery is carried.
4) The roller transmission device of the conveying unit 31 works to move the battery 7 into the battery compartment 8 and exchanges the battery 7. During the transportation of the battery, the docking and guiding units 13 limit a transportation path of the battery, to ensure that the battery will not deviate. The lifting/lowering portion ascends again such that the second support surface 611 of the locking/unlocking unit is higher than the first support surface 311 of the conveying unit 31, and the battery pins 614 are aligned with the battery 7 again. When the battery swap trolley reaches the battery swap station 9 again, the second support surface 611 has already become higher than the first support surface 311.
5) The battery swap trolley enters the battery swap station 9, the vehicle is lowered, and the vehicle body is aligned with the locking/unlocking unit by means of the vehicle body pins 615 on the locking/unlocking unit. The torque guns 613 work, and the battery 7 is installed onto the vehicle.
6) The vehicle is raised, and the battery swap trolley exits the battery swap station 9. The battery swap is completed.

It should be noted that, the track rails and driving components thereof may not be included in the battery swapping executing mechanism, but are integrated into the battery swap station for a battery swap operation, or integrated into a manual battery swap trolley for a manual battery swap operation.

Although specific embodiments of the application have been shown and described in detail to illustrate the principles of the application, it should be understood that the application may be implemented in other ways without departing from such principles.

## Claims

1. A battery swapping actuating mechanism, comprising: a base (1), a locking/unlocking unit (6) for locking/unlocking a battery pack, a conveying unit (31) for conveying the battery pack, and a lifting unit, wherein
the lifting unit comprises a driving mechanism (32) and a lifting/lowering portion (4) that is able to be driven by the driving mechanism (32) to ascend or descend; and the locking/unlocking unit (6) is connected to the lifting/lowering portion (4) and is able to ascend or descend along with the lifting/lowering portion (4), such that the top of the locking/unlocking unit (6) is higher or lower than the conveying unit (31), and the conveying unit (31) is supported on the base (1), and
the locking/unlocking unit (6) is connected to the lifting/lowering portion (4) by means of a floating mechanism such that the locking/unlocking unit (6) floats at least in a horizontal plane,
**characterized in that** the floating mechanism comprises chains (51) and columns (52), each of the chains (51) has a first end connected to the lifting/lowering portion (4) in a first direction (x) and a second end connected to a first end of a respective one of the columns (52), the columns (52) are suspended to the lifting/lowering portion (4), and a second end of each of the columns (52) secures the locking/unlocking unit (6) in the first direction (x).

2. The battery swapping actuating mechanism according to claim 1, **characterized in that** the lifting/lowering portion (4) is provided with guide portions (42), the driving mechanism (32) is provided with movable portions (323), the movable portions (323) move in a second direction (y), the second direction (y) is substantially perpendicular to the first direction (x), and one of the guide portion (42) and the movable portion (323) comprises a wedged surface (421), and the other of the two is mated with the wedged surface (421).

3. The battery swapping actuating mechanism according to claim 2, **characterized in that** the movable portion (323) has a roller assembly (328, 329), the guide portion (42) has a wedged surface (421), and the roller assembly (328, 329) is mated with the wedged surface (421).

4. The battery swapping actuating mechanism according to claim 2, **characterized in that** the lifting unit further comprises guide columns (43) in the first direction (x), one end of each of the guide columns (43) is arranged on the base (1), a lifting/lowering component (41) of the lifting/lowering portion (4) is provided with a through hole (419) for the guide column (43) to pass through, and the guide column (43) is used for limiting a lifting/lowering trajectory, in the first direction (x), of the lifting/lowering component (41).

5. The battery swapping actuating mechanism according to claim 2, **characterized in that** a plurality of groups of guide portions (42) and movable portions (323) which are mated with each other are provided, the driving mechanism (32) further comprises a first frame (322) and a driving member (321), all the movable portions (323) are disposed on the first frame (322), and motion output from the driving member (321) drives one or more of the movable portions (323) to move in the second direction (y), so as to drive the first frame (322) to bring other movable portions (323) into movement on the base (1) in the second direction (y).

6. The battery swapping actuating mechanism according to claim 1, **characterized in that** the locking/unlocking unit (6) has an opening for exposing the conveying unit (31), and when the locking/unlocking unit (6) and the conveying unit (31) are raised or lowered relative to each other, the top of the conveying unit (31) is able to ascend from the opening to a level higher than the locking/unlocking unit (6) or descend to a level lower than the locking/unlocking unit (6).

7. The battery swapping actuating mechanism according to claim 2, **characterized in that** the conveying unit (31) is composed of roller transmission devices arranged side by side in the second direction (y), the roller transmission devices comprise a plurality of roller carriers (312) arranged in the second direction (y), powered rollers (318) are disposed in at least one of the plurality of the roller carriers (312), and unpowered rollers (319) are disposed in at least one of the other roller carriers.

8. The battery swapping actuating mechanism according to claim 6, **characterized in that** a main body of the locking/unlocking unit (6) is a second frame (61).

9. The battery swapping actuating mechanism according to claim 8, **characterized in that** the locking/unlocking unit (6) comprises torque guns (613) for locking and unlocking a battery, and battery pins (614) and vehicle body pins (615) which assist in battery locking and unlocking, wherein the battery pins (614) are used for alignment with the battery before battery detachment, and the vehicle body pins (615) are used for alignment with a vehicle body before battery installation.

10. The battery swapping actuating mechanism according to claim 2, **characterized by** further comprising track rails (11) arranged in the second direction (y), wherein docking and guiding units (13) are disposed at one end of the track rails (11) to guide a battery being exchanged; and
the docking and guiding units (13) are disposed at two sides, in a third direction (z), of the base (1), the third direction (z) being substantially perpendicular to the second direction (y).

## Patentansprüche

1. Batteriewechsel-Betätigungsmechanismus, der Folgendes umfasst: eine Basis (1), eine Verriegelungs/Entriegelungs-Einheit (6) zum Verriegeln/Entriegeln einer Batteriebaugruppe, eine Fördereinheit (31) zum Befördern der Batteriebaugruppe und eine Hebeeinheit, wobei
die Hebeeinheit einen Antriebsmechanismus (32) und einen Anhebe/Absenk-Abschnitt (4), der durch den Antriebsmechanismus (32) auf eine Weise angetrieben werden kann, dass er aufsteigt oder absteigt, umfasst; und die Verriegelungs/Entriegelungs-Einheit (6) mit dem Anhebe/Absenk-Abschnitt (4) verbunden ist und zusammen mit dem Anhebe/Absenk-Abschnitt (4) aufsteigen oder absteigen kann, derart, dass die Oberseite der Verriegelungs/Entriegelungs-Einheit (6) höher oder niedriger als die Fördereinheit (31) ist, und die Fördereinheit (31) auf der Basis (1) getragen wird, und
die Verriegelungs/Entriegelungs-Einheit (6) mittels eines Schwebemechanismus mit dem Anhebe/Absenk-Abschnitt (4) verbunden ist, derart, dass die Verriegelungs/Entriegelungs-Einheit (6) zumindest in einer horizontalen Ebene schwebt,
**dadurch gekennzeichnet, dass** der Schwebemechanismus Ketten (51) und Säulen (52) umfasst, jede der Ketten (51) ein erstes Ende, das in einer ersten Richtung (x) mit dem Anhebe/Absenk-Abschnitt (4) verbunden ist, und ein zweites Ende, das mit einem ersten Ende einer jeweiligen der Säulen (52) verbunden ist, aufweist, die Säulen (52) am Anhebe/Absenk-Abschnitt (4) aufgehängt sind und ein zweites Ende von jeder der Säulen (52) die Verriegelungs/Entriegelungs-Einheit (6) in der ersten Richtung (x) befestigt.

2. Batteriewechsel-Betätigungsmechanismus nach Anspruch 1, **dadurch gekennzeichnet, dass** der Anhebe/Absenk-Abschnitt (4) mit Führungsabschnitten (42) versehen ist, der Antriebsmechanismus (32) mit beweglichen Abschnitten (323) versehen ist, die beweglichen Abschnitte (323) sich in einer zweiten Richtung (y) bewegen, die zweite Richtung (y) zur ersten Richtung (x) im Wesentlichen senkrecht ist und einer des Führungsabschnitts (42) und des beweglichen Abschnitts (323) eine keilförmige Fläche (421) umfasst und der andere der beiden sich mit der keilförmigen Fläche (421) in Eingriff befindet.

3. Batteriewechsel-Betätigungsmechanismus nach Anspruch 2, **dadurch gekennzeichnet, dass** der bewegliche Abschnitt (323) eine Rollenanordnung (328, 329) aufweist, der Führungsabschnitt (42) eine keilförmige Fläche (421) aufweist und die Rollenanordnung (328, 329) sich mit der keilförmigen Fläche (421) in Eingriff befindet.

4. Batteriewechsel-Betätigungsmechanismus nach Anspruch 2, **dadurch gekennzeichnet, dass** die Hebeeinheit ferner Führungssäulen (43) in der ersten Richtung (x) umfasst, ein Ende jeder der Führungssäulen (43) auf der Basis (1) angeordnet ist, eine Anhebe/Absenk-Komponente (41) des Anhebe/Absenk-Abschnitts (4) mit einem Durchgangsloch (419) versehen ist, damit die Führungssäule (43) dort hindurch verläuft, und die Führungssäule (43) zum Begrenzen einer Anhebe/Absenk-Bewegungsbahn in der ersten Richtung (x) der Anhebe/Absenk-Komponente (41) verwendet wird.

5. Batteriewechsel-Betätigungsmechanismus nach Anspruch 2, **dadurch gekennzeichnet, dass** mehrere Gruppen von Führungsabschnitten (42) und beweglichen Abschnitten (323) vorgesehen sind, die sich miteinander in Eingriff befinden, der Antriebsmechanismus (32) ferner einen ersten Rahmen (322) und ein Antriebselement (321) umfasst, alle beweglichen Abschnitte (323) auf dem ersten Rahmen (322) angeordnet sind und eine Bewegung, die vom Antriebselement (321) ausgegeben wird, einen oder mehrere der beweglichen Abschnitte (323) auf eine Weise antreibt, dass sie sich in der zweiten Richtung (y) bewegen, um den ersten Rahmen (322) auf eine Weise anzutreiben, dass bewirkt wird, dass andere bewegliche Abschnitte (323) auf der Basis (1) in der zweiten Richtung (y) in Bewegung gelangen.

6. Batteriewechsel-Betätigungsmechanismus nach Anspruch 1, **dadurch gekennzeichnet, dass** die Verriegelungs/Entriegelungs-Einheit (6) eine Öffnung zum Freilegen der Fördereinheit (31) aufweist und dann, wenn die Verriegelungs/Entriegelungs-Einheit (6) und die Fördereinheit (31) relativ zueinander angehoben oder abgesenkt werden, die Oberseite der Fördereinheit (31) aus der Öffnung auf eine Höhe ansteigen kann, die höher als die Verriegelungs/Entriegelungseinheit (6) ist, oder auf eine Höhe absteigen kann, die niedriger als die Verriegelungs/Entriegelungseinheit (6) ist.

7. Batteriewechsel-Betätigungsmechanismus nach Anspruch 2, **dadurch gekennzeichnet, dass** die Fördereinheit (31) aus Walzenübertragungsvorrichtungen besteht, die in der zweiten Richtung (y) nebeneinander angeordnet sind, die Walzenübertragungsvorrichtungen mehrere Walzenträger (312), die in der zweiten Richtung (y) angeordnet sind, umfasst, angetriebene Walzen (318) in mindestens einem der mehreren Walzenträger (312) angeordnet sind und nicht angetriebene Walzen (319) in mindestens einem der anderen Walzenträger angeordnet sind.

8. Batteriewechsel-Betätigungsmechanismus nach Anspruch 6, **dadurch gekennzeichnet, dass** ein Hauptkörper des Verriegelungs/Entriegelungs-Einheit (6) ein zweiter Rahmen (61) ist.

9. Batteriewechsel-Betätigungsmechanismus nach Anspruch 8, **dadurch gekennzeichnet, dass** die Verriegelungs/Entriegelungs-Einheit (6) Drehmomentschlagschrauber (613) zum Verriegeln und Entriegeln einer Batterie und Batteriebolzen (614) und Fahrzeugkarosseriebolzen (615), die beim Verriegeln und Entriegeln der Batterie unterstützen, umfasst, wobei die Batteriebolzen (614) zur Ausrichtung auf die Batterie vor dem Batterieausbau verwendet werden und die Fahrzeugkarosseriebolzen (615) zur Ausrichtung auf eine Fahrzeugkarosserie vor dem Batterieeinbau verwendet werden.

10. Batteriewechsel-Betätigungsmechanismus nach Anspruch 2, **dadurch gekennzeichnet, dass** er ferner Spurschienen (11) umfasst, die in der zweiten Richtung (y) angeordnet sind, wobei Kopplungs- und Führungseinheiten (13) an einem Ende der Spurschienen (11) angeordnet sind, um eine Batterie, die ausgetauscht wird, zu führen; und
die Kopplungs- und Führungseinheiten (13) an zwei Seiten in einer dritten Richtung (z) der Basis (1) angeordnet sind, wobei die dritte Richtung (z) zur zweiten Richtung (y) im Wesentlichen senkrecht ist.

## Revendications

1. Mécanisme d'actionnement d'échange de batteries comprenant : une base (1), une unité de verrouillage/déverrouillage (6) pour verrouiller/déverrouiller un bloc-batterie, une unité de transport (31) pour transporter le bloc-batterie, et une unité de soulèvement,
dans lequel l'unité de soulèvement comporte un mécanisme d'entraînement (32) et une partie de soulèvement/d'abaissement (4) qui est capable d'être entraînée par le mécanisme d'entraînement (32) afin de monter ou de descendre ; et dans lequel l'unité de verrouillage/déverrouillage (6) est rattachée à la partie de soulèvement/d'abaissement (4), et est capable de monter ou de descendre avec la partie de soulèvement/d'abaissement (4), de manière à ce que le sommet de l'unité de verrouillage/déverrouillage (6) soit plus haut ou plus bas que l'unité de transport (31), et l'unité de transport (31) étant supportée sur la base (1), et
dans lequel l'unité de verrouillage/déverrouillage (6) est rattachée à la partie de soulèvement/d'abaissement (4) au moyen d'un mécanisme de flottement de manière à ce que l'unité de verrouillage/déverrouillage (6) flotte au moins dans un plan horizontal,
**caractérisé en ce que** le mécanisme de flottement comporte des chaînes (51) et des colonnes (52), chacune de ces chaînes (51) ayant une première extrémité rattachée à la partie de soulèvement/d'abaissement (4) dans une première direction (x) et une deuxième extrémité rattachée à une première extrémité d'une colonne respective parmi les colonnes (52), les colonnes (52) étant suspendues à la partie de soulèvement/d'abaissement (4), et une deuxième extrémité de chacune des colonnes (52) fixant l'unité de verrouillage/déverrouillage (6) dans la première direction (x).

2. Mécanisme d'actionnement d'échange de batteries selon la revendication 1, **caractérisé en ce que** la partie de soulèvement/d'abaissement (4) est pourvue de parties de guidage (42), le mécanisme d'entraînement (32) est pourvu de parties mobiles (323), ces parties mobiles (323) se déplaçant dans une deuxième direction (y), cette deuxième direction (y) étant essentiellement perpendiculaire à la première direction (x), et soit la partie de guidage (42), soit la partie mobile (323) comportant une surface cunéiforme (421) et l'autre des deux parties étant accouplée à cette surface cunéiforme (421).

3. Mécanisme d'actionnement d'échange de batteries selon la revendication 2, **caractérisé en ce que** la partie mobile (323) a un ensemble de galets (328, 329), la partie de guidage (42) a une surface cunéiforme (421), et l'ensemble de galets (328, 329) est accouplé à la surface cunéiforme (421).

4. Mécanisme d'actionnement d'échange de batteries selon la revendication 2, **caractérisé en ce que** l'unité de soulèvement comporte en outre des colonnes de guidage (43) dans la première direction (x), une extrémité de chacune de ces colonnes de guidage (43) étant disposée sur la base (1), un élément de soulèvement/d'abaissement (41) de la partie de soulèvement/d'abaissement (4) est pourvu d'un trou débouchant (419) pour que la colonne de guidage (43) passe à travers lui, et la colonne de guidage (43) est utilisée pour limiter une trajectoire de soulèvement/d'abaissement, dans la première direction (x), de l'élément de soulèvement/d'abaissement (41).

5. Mécanisme d'actionnement d'échange de batteries selon la revendication 2, **caractérisé en ce qu'**une pluralité de groupes de parties de guidage (42) et de parties mobiles (323) qui sont accouplées les unes aux autres sont prévues, le mécanisme d'entraînement (32) comprend en outre un premier châssis (322) et un élément d'entraînement (321), toutes les parties mobiles (323) sont disposées sur le premier châssis (322), et le mouvement fourni par l'élément d'entraînement (321) entraîne une ou plusieurs des parties mobiles (323) pour qu'elles se déplacent dans la deuxième direction (y), afin d'entraîner le premier châssis (322) pour faire en sorte que d'autres parties mobiles (323) se déplacent sur la base (1) dans la deuxième direction (y).

6. Mécanisme d'actionnement d'échange de batteries selon la revendication 1, **caractérisé en ce que** l'unité de verrouillage/déverrouillage (6) a une ouverture pour exposer l'unité de transport (31), et, lorsque l'unité de verrouillage/déverrouillage (6) et l'unité de transport (31) sont soulevées ou abaissées l'une par rapport à l'autre, le sommet de l'unité de transport (31) est capable de monter depuis l'ouverture jusqu'à un niveau plus haut que l'unité de verrouillage/déverrouillage (6) ou de descendre à un niveau plus bas que l'unité de verrouillage/déverrouillage (6).

7. Mécanisme d'actionnement d'échange de batteries selon la revendication 2, **caractérisé en ce que** l'unité de transport (31) est composée de dispositifs de transmission à rouleaux disposés côte à côte dans la deuxième direction (y), ces dispositifs de transmission à rouleaux comportant une pluralité de porte-rouleaux (312) disposés dans la deuxième direction (y), les rouleaux commandés (318) étant disposés dans au moins un porte-rouleau parmi la pluralité de porte-rouleaux (312), et les rouleaux non commandés (319) étant disposés dans au moins un des autres porte-rouleaux.

8. Mécanisme d'actionnement d'échange de batteries selon la revendication 6, **caractérisé en ce qu'**un corps principal de l'unité de verrouillage/déverrouillage (6) est un deuxième châssis (61).

9. Mécanisme d'actionnement d'échange de batteries selon la revendication 8, **caractérisé en ce que** l'unité de verrouillage/déverrouillage (6) comporte des pistolets dynamométriques (613) pour verrouiller et déverrouiller une batterie, et des chevilles de batterie (614) et des chevilles de carrosserie ce véhicule (615) qui facilitent le verrouillage et le déverrouillage de la batterie, les chevilles de batterie (614) étant utilisées pour l'alignement avec la batterie avant le détachement de la batterie, et les chevilles de carrosserie ce véhicule (615) étant utilisées pour l'alignement avec une carrosserie de véhicule avant l'installation de la batterie.

10. Mécanisme d'actionnement d'échange de batteries selon la revendication 2, **caractérisé en ce qu'**il comporte en outre des rails de voie (11) disposés dans la deuxième direction (y), des unités d'amarrage et de guidage (13) étant disposées à une extrémité de ces rails de voie (11) afin de guider une batterie étant échangée ; et
ces unités d'amarrage et de guidage (13) étant disposées sur deux côtés, dans une troisième direction (z) de la base (1), cette troisième direction (z) étant essentiellement perpendiculaire à la deuxième direction (y).
